# FASCICULE DE BREVET EUROPEEN

(11) **EP 3 379 157 B1**
(45) Date de publication et mention de la délivrance du brevet: **09.10.2019**
(21) Numéro de dépôt: 18162471.9
(22) Date de dépôt: 19.03.2018
(51) Int. Cl.: F24F 5/00, F24F 11/00, F24F 13/04, F24F 13/14

(54) **VANNE DE DISTRIBUTION D'AIR CHAUD ET DE VENTILATION POUR UNE FAÇADE AVEC RÉCUPÉRATION DE CHALEUR**
VENTIL ZUR WARMLUFTVERTEILUNG UND BELÜFTUNG EINER FASSADE MIT WÄRMERÜCKGEWINNUNG
HOT AIR AND VENTILATION DISTRIBUTION VALVE FOR A FAÇADE WITH HEAT RECOVERY

(30) Priorité: 22.03.2017 FR 1752351
(43) Date de publication de la demande: 26.09.2018
(73) Titulaire: ALDES AERAULIQUE, 69200 Venissieux Cedex (FR)
(72) Inventeur: LABAUME, Damien, 31570 PRESERVILLE (FR); BUSEYNE, Serge, 31200 TOULOUSE (FR)
(74) Mandataire: Chevalier, Renaud Philippe

(56) Documents cités:
- CN-A- 102 995 802
- FR-A1- 2 509 023
- FR-A1- 2 977 006
- FR-A1- 2 987 432
- US-A- 3 883 071
- US-A1- 2001 012 756

## Description

La présente invention concerne une vanne de distribution de débit pour une façade ventilée avec récupération d'air chaud, ainsi qu'une installation de ventilation comportant une telle vanne de distribution.

Un système connu de récupération d'air chaud sur la façade d'un bâtiment, comporte une lame d'air vertical disposée entre un revêtement de façade récupérant l'énergie solaire, en particulier un vitrage, et un mur arrière à accumulation thermique présentant une masse thermique importante qui est chauffée par le rayonnement passant au travers du revêtement de façade.

La façade bien exposée au soleil récupère des calories pendant son rayonnement, notamment par effet de serre au travers d'un vitrage, qui sont stockées dans le mur arrière suffisamment épais pour constituer une réserve thermique. La façade peut de plus supporter des éléments complémentaires, comme une végétation ou des capteurs solaires.

La lame d'air comportant en bas des entrées d'air extérieur, reçoit par ces entrées l'air froid qui est chauffé le long du mur à accumulation. L'air chauffé étant plus léger, monte dans la lame en continuant à se chauffer, puis sort par une ou plusieurs vannes de distribution installées en partie supérieure pour alimenter un réseau de distribution ou une bouche d'insufflation dans le bâtiment.

On obtient une circulation naturelle de l'air, sans système mécanique. En complément on peut ajouter des ventilateurs pour distribuer le flux d'air chaud.

Pour les périodes suffisamment chaudes, les vannes de distribution comportent un clapet qui peut être à commande manuelle ou automatique, rejetant l'air chauffé en haut de la lame d'air directement vers l'extérieur afin d'éviter de surchauffer le bâtiment.

En complément le réseau de distribution d'air chauffé dans le bâtiment peut travailler en recyclage d'air, avec une entrée basse dans la lame d'air prélevant l'air à l'intérieur du bâtiment, pour chauffer cet air à nouveau puis le renvoyer dans le bâtiment.

Par ailleurs les habitations ou les bâtiments recevant du personnel comportent généralement un système de ventilation indépendant permettant de renouveler l'air des différentes pièces avec un débit contrôlé, en prélevant de l'air extérieur, afin d'assurer des bonnes conditions hygiéniques. On utilise en particulier des ventilations mécaniques contrôlées appelées « VMC », comportant une turbine motorisée régulant le débit d'air d'extraction.

Il faut alors pour un bâtiment comportant un système de récupération d'air chaud sur la façade, prévoir deux réseaux de distribution d'air indépendant comportant chacun ses entrées ou sorties d'air vers l'extérieur. Ces deux réseaux posent des problèmes d'espace, notamment pour installer les réseaux de canalisations dans le bâtiment, et pour disposer leurs entrées ou sorties indépendantes sur les façades, qui ne sont pas toujours esthétiques.

De plus l'installation de deux réseaux indépendants représente un coût important.

Le document FR 2 509 023 divulgue une vanne de distribution d'air selon le préambule de la revendication 1.

La présente invention a notamment pour but d'éviter ces inconvénients de la technique antérieure.

Elle propose à cet effet une vanne de distribution d'air prévue pour un débit d'air chauffé venant d'une lame d'air disposée derrière une façade ventilée d'un bâtiment, cette vanne de distribution comportant une première entrée d'air prévue pour recevoir l'air de la lame d'air, une première sortie d'air prévue pour diriger l'air vers un réseau de distribution dans le bâtiment, une deuxième sortie d'air prévue pour diriger l'air vers l'extérieur, et un clapet mobile distribuant le débit d'air vers l'une ou l'autre des sorties, cette vanne étant remarquable en ce qu'elle comporte une deuxième entrée d'air prévue pour prélever l'air extérieur et le diriger vers la première sortie.

Un avantage de cette vanne de distribution est que dans un même système installé sur une unique ouverture de la façade du bâtiment, on concentre à la fois la régulation nécessaire pour la récupération d'énergie solaire afin de distribuer l'air chaud vers le réseau de distribution dans le bâtiment, ou de l'éliminer par la première sortie si cette énergie n'est pas nécessaire, ainsi que l'entrée d'air extérieur pour un système de ventilation du bâtiment, qui est dirigé vers le même réseau de distribution.

On réalise ainsi un système compact occupant peu de place sur la façade du bâtiment, nécessitant un unique perçage sur la façade donnant les deux passages d'air vers l'extérieur, qui est économique à réaliser et à installer.

La vanne de distribution selon l'invention peut comporter de plus une ou plusieurs des caractéristiques suivantes, qui peuvent être combinées entre elles.

Avantageusement, le clapet mobile est fixé sur un pivot.

Dans ce cas, le pivot du clapet mobile peut être disposé horizontalement dans une partie centrale de ce clapet. L'utilisation d'un pivot permet de réaliser de manière simple et économique un mouvement du clapet.

Avantageusement, le clapet mobile comporte une première position d'extrémité reliant la première entrée avec la première sortie, et fermant la deuxième sortie ainsi que la deuxième entrée.

Avantageusement, le clapet mobile comporte une deuxième position d'extrémité reliant la première entrée avec la deuxième sortie, et reliant de manière indépendante la deuxième entrée avec la première sortie. On réalise de cette manière facilement avec les deux positions d'extrémité, les deux fonctions couramment utilisées de récupération complète d'énergie, ou de son évacuation complète.

En particulier, la première entrée et la première sortie peuvent occuper toute la largeur de la vanne.

Dans ce cas, avantageusement sur la largeur de la vanne la deuxième entrée occupe une partie centrale d'une surface prévue pour venir en façade du bâtiment, la deuxième sortie occupant les parties latérales de chaque côté de cette deuxième entrée. On peut réaliser de cette manière facilement une séparation des flux sortants et rentrants afin d'éviter un recyclage de l'air sortant.

Avantageusement, la vanne de distribution comporte une unique grille prévue pour venir en façade du bâtiment, couvrant la deuxième sortie et la deuxième entrée.

Avantageusement, la vanne de distribution est formée à partir de tôles pliées et assemblées, ou par un moulage de matière plastique.

L'invention a de plus pour objet une installation de ventilation prévue pour un bâtiment équipé d'un système de récupération d'énergie solaire, comportant une vanne de distribution d'air présentant l'une quelconque des caractéristiques précédentes.

D'autres caractéristiques et avantages de l'invention ressortiront à la lecture de la description qui suit, donnée uniquement à titre d'exemple, en référence aux figures annexées suivantes :
- les figures 1 et 2 sont des schémas d'un système de récupération de chaleur sur la façade équipé d'une vanne de distribution de débit d'air selon l'invention, présenté successivement dans une position de récupération de chaleur et dans une position de rejet de cette chaleur ;
- les figures 3 et 4 sont des vues d'une vanne de distribution d'air selon l'invention, présentée successivement avec sa grille extérieure et sans cette grille ; et
- les figures 5, 6 et 7 sont des vues en coupe suivant un plan médian vertical de cette vanne de distribution, présentée successivement dans une position de récupération de chaleur et de ventilation, dans une position de ventilation avec rejet de l'air chaud, et dans une position mixte de récupération de chaleur avec ventilation.

Pour plus de clarté, les éléments identiques ou similaires sont repérés par des signes de référence identiques sur l'ensemble des figures.

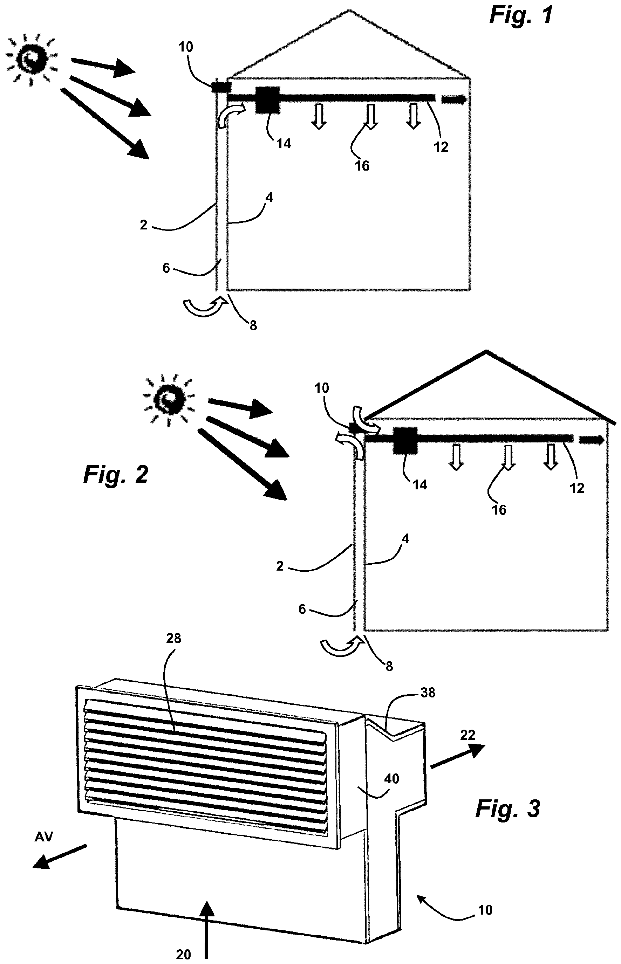

La figure 1 présente un bâtiment comportant du côté exposé au soleil une façade récupérant le rayonnement solaire 2, en particulier une façade vitrée, disposée devant un mur épais 4 constituant une masse thermique réalisant une accumulation de calories, pour former entre eux une lame d'air vertical 6 équipée d'entrées d'air en partie basse 8.

L'air chauffé par le rayonnement direct du soleil quand il donne, ainsi que par la chaleur du mur à accumulation 4, monte le long de la lame d'air 6, puis est distribué par une vanne de distribution 10 disposée en partie supérieure de cette lame.

La vanne de distribution 10 reçoit l'air chaud d'une première entrée venant de la lame d'air 6, pour l'envoyer par une première sortie vers un réseau de distribution 12 comportant un ventilateur d'activation du flux 14, et différentes sorties d'air chaud 16 réparties dans le bâtiment.

De cette manière on réalise en même temps un chauffage du bâtiment par la récupération d'énergie solaire, et une ventilation de ce bâtiment par l'entrée d'air en partie basse 8 prélevant l'air à l'extérieur pour alimenter le réseau de distribution 12, par l'intermédiaire de la lame d'air 6.

La figure 2 présente la vanne de distribution 10 lorsque le bâtiment est suffisamment chauffé, comportant un clapet qui d'une part renvoie le débit naturel d'air chauffé dans la lame d'air 6 vers l'extérieur par une deuxième sortie disposée en façade, et en même temps prélève de l'air extérieur par une deuxième entrée disposée aussi en façade, pour l'envoyer dans le réseau de distribution 12 par l'intermédiaire du ventilateur 14 pulsant cet air frais.

On obtient de cette manière avec une unique vanne de distribution 10 et un réseau de distribution commun 12, la possibilité de réaliser à la fois le chauffage par la récupération d'énergie et la ventilation du bâtiment en été comme en hiver.

Les figures 3, 4, 5, 6 et 7 présentent une vanne de distribution 10 comportant d'un côté appelé par convention côté avant, indiqué par la flèche AV, une grille de façade 28 venant s'ajuster sur la façade du bâtiment, formant un rectangle allongé horizontalement couvrant la largeur complète de cette vanne.

La vanne de distribution 10 est formée entièrement par des tôles pliées et assemblées entre elles, ce qui représente un moyen de fabrication économique. En variante on peut réaliser la vanne de distribution 10 avec un moulage par injection d'une matière plastique.

Une première entrée d'air 20 orientée verticalement et tournée vers le bas, forme un rectangle allongé couvrant la largeur complète de la vanne, qui est disposé dans la lame d'air 6, entre la façade 2 et le mur à accumulation 4.

Une première sortie d'air 22 orientée horizontalement et tournée vers l'arrière, forme un rectangle allongé couvrant la largeur complète de la vanne 10, qui est raccordé au réseau de distribution 12 dans le bâtiment.

La vanne de distribution 10 comporte un cadre rectangulaire 40 disposé en avant de la première entrée d'air 20, présentant un passage allongé horizontalement débouchant vers l'avant, qui couvre la largeur complète de la vanne 10. La base du cadre 40 est au niveau de la base de la première sortie d'air 22. Le côté supérieur du cadre 40 est raccordé par une tôle en pente 38 au côté supérieur de la première sortie 22 disposé plus bas.

Le cadre 40 comporte en façade une deuxième entrée d'air 26 présentant une section rectangulaire disposée au centre de ce cadre. Une tôle de raccordement 42 de faible hauteur ferme le passage entre la base de la deuxième entrée d'air 26 et le côté inférieur du cadre 40.

Chaque côté de la deuxième entrée d'air 26 constitue la deuxième sortie d'air 24. Le passage de la deuxième entrée d'air 26 est séparé de celui de la deuxième sortie d'air 24 par des tôles disposées en biais s'ajustant sur le contour de cette deuxième entrée d'air, s'étendant sur la profondeur du cadre 40, comprenant une tôle du dessous 30 qui remonte vers l'arrière, et deux tôles de côté 32 qui s'écartent l'une de l'autre vers l'arrière.

La tôle du dessous 30 comporte un bord arrière disposé environ aux deux tiers supérieurs du cadre 40. L'air entrant par la deuxième entrée d'air 26 est dirigé par la tôle du dessous 30 pour être remonté sur le tiers supérieur du cadre 40, et par les tôles de côté 32 pour être étalé sur la largeur de la vanne de distribution 10, en sortant par une section rectangulaire présentant une faible hauteur et la largeur complète de cette vanne.

Les tôles en biais 30, 32 encadrant la deuxième entrée d'air 26, présentent des pentes qui donnent une direction au flux d'air sortant par la deuxième sortie 24 de chaque côté de cette deuxième entrée d'air, afin d'éviter un recyclage de l'air sortant vers cette entrée d'air.

Un clapet de distribution 34 formé dans une tôle plate s'étendant sur toute la largeur de la vanne 10, comporte un axe de pivotement 36 disposé transversalement au milieu de ce clapet, permettant différentes positions angulaires commandées manuellement ou par un système automatique.

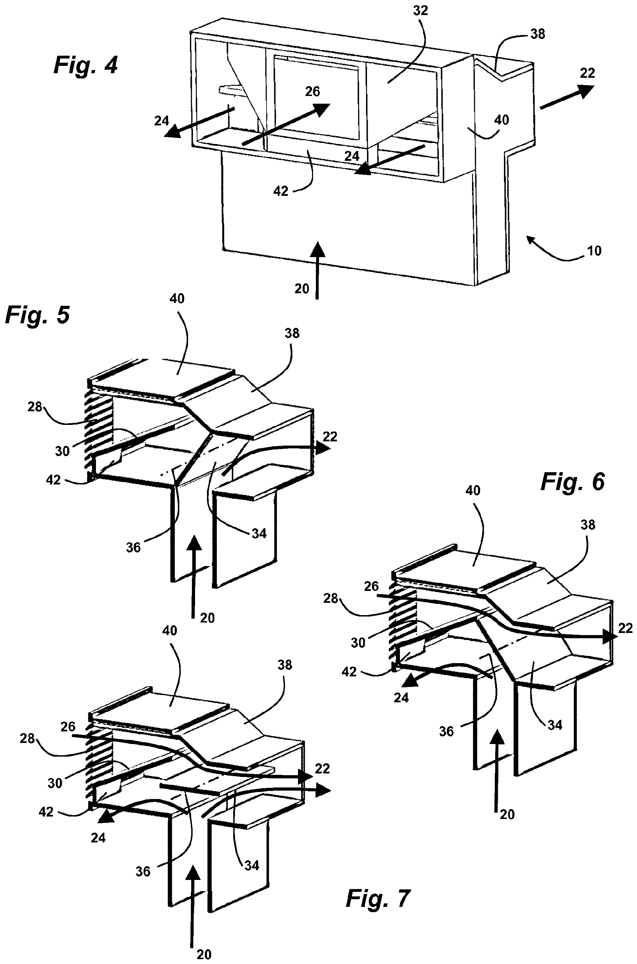

Le clapet de distribution 34 réalise dans une première position d'extrémité présentée figure 5 une récupération de chaleur, dans la position d'extrémité opposée présentée figure 6 un rejet de la chaleur vers l'extérieur avec une entrée d'air frais de ventilation, et dans une position intermédiaire présentée figure 7 un mixage de ces deux fonctions.

La figure 5 présente le clapet 34 comportant son côté avant en appui sur l'angle des tôles formé entre la première entrée 20 et la deuxième sortie 24, et son côté arrière en appui sur l'angle entre la tôle en pente 38 et la première sortie 22.

De cette manière le clapet 34 ferme entièrement la deuxième sortie 24 et la deuxième entrée 26, et dirige tout l'air venant de la première entrée 20 vers la première sortie 22, pour diriger toute la chaleur venant de la lame d'air 6 dans le bâtiment. L'air chauffé dans la lame d'air 6 venant de l'extérieur réalise en même temps une ventilation du bâtiment.

La figure 6 présente le clapet 34 comportant son côté avant en appui sur le côté arrière de la tôle du dessous 30, et son côté arrière en appui sur l'angle entre la première entrée 20 et la première sortie 22. De cette manière le clapet 34 dirige entièrement l'air venant de la première entrée 20 vers la deuxième sortie 24, afin de l'évacuer dehors.

En même temps le clapet 34 laisse au-dessus de lui un passage direct pour l'air venant de la deuxième entrée 26 qui est dirigé vers la première sortie 22, afin de fournir au réseau de distribution 12 de l'air frais propulsé par le ventilateur 14 pour aérer le bâtiment sans le chauffer.

La figure 7 présente le clapet 34 disposé horizontalement dans une position intermédiaire. Le ventilateur 14 réalise à la fois une aspiration d'air chauffé venant de la lame d'air 6 par la première entrée 20, et d'air frais venant de l'extérieur par la deuxième entrée 26, en mixant ces deux flux pour obtenir un chauffage modéré ainsi qu'une ventilation du bâtiment.

De plus un excès d'air chauffé venant de la première entrée d'air 20, montant dans la lame d'air 6 à cause de sa dilatation, peut s'évacuer directement par la deuxième sortie 24 pour obtenir le chauffage modéré du bâtiment.

Avantageusement l'installation comporte un système de régulation automatique commandant le clapet de distribution 34 par une motorisation, à partir de différents capteurs indiquant les besoins de régulation de la température et de la ventilation.

D'une manière générale le réseau de distribution du bâtiment 12 selon l'invention peut comporter tout type de ventilation, comprenant en particulier une ventilation mécanique à simple flux réalisant une extraction de l'air pour le rejeter vers l'extérieur, une ventilation mécanique à double flux réalisant une récupération de chaleur sur l'air extrait pour réinjecter cette chaleur dans le bâtiment par un deuxième flux, ou une ventilation mécanique par insufflation disposée en entrée du bâtiment afin de générer une légère surpression dans ce bâtiment. Le réseau de distribution peut aussi ne pas comporter de ventilateur, en utilisant uniquement des circulations d'air naturelles.

L'invention permet d'éviter de doubler les réseaux de distribution d'air, en répartissant dans les différentes pièces par un unique circuit à la fois l'air chaud et l'air de ventilation.

## Revendications

1. Vanne de distribution d'air prévue pour un débit d'air chauffé venant d'une lame d'air (6) disposée derrière une façade ventilée (2) d'un bâtiment, cette vanne de distribution (10) comportant une première entrée d'air (20) prévue pour recevoir l'air de la lame d'air (6), une première sortie d'air (22) prévue pour diriger l'air vers un réseau de distribution dans le bâtiment (12), une deuxième sortie d'air (24) prévue pour diriger l'air vers l'extérieur, et un clapet mobile (34) distribuant le débit d'air vers l'une ou l'autre des sorties (22, 24), **caractérisée en ce qu'**elle comporte une deuxième entrée d'air (26) prévue pour prélever l'air extérieur et le diriger vers la première sortie (22).

2. Vanne de distribution selon la revendication 1, **caractérisée en ce que** le clapet mobile (34) est fixé sur un pivot (36).

3. Vanne de distribution selon la revendication 2, **caractérisée en ce que** le pivot (36) du clapet mobile (34) est disposé horizontalement dans une partie centrale de ce clapet.

4. Vanne de distribution selon l'une quelconque des revendications précédentes, **caractérisée en ce que** le clapet mobile (34) comporte une première position d'extrémité reliant la première entrée (20) avec la première sortie (22), et fermant la deuxième sortie (24) ainsi que la deuxième entrée (26).

5. Vanne de distribution selon l'une quelconque des revendications précédentes, **caractérisée en ce que** le clapet mobile (34) comporte une deuxième position d'extrémité reliant la première entrée (20) avec la deuxième sortie (24), et reliant de manière indépendante la deuxième entrée (26) avec la première sortie (22).

6. Vanne de distribution selon l'une quelconque des revendications précédentes, **caractérisée en ce que** la première entrée (20) et la première sortie (24) occupent toute la largeur de cette vanne (10).

7. Vanne de distribution selon la revendication 6, **caractérisée en ce que** sur la largeur de cette vanne (10) la deuxième entrée (26) occupe une partie centrale d'une surface prévue pour venir en façade du bâtiment, la deuxième sortie (24) occupant les parties latérales de chaque côté de cette deuxième entrée (26).

8. Vanne de distribution selon l'une quelconque des revendications précédentes, **caractérisée en ce qu'**elle comporte une unique grille (28) prévue pour venir en façade du bâtiment, couvrant la deuxième sortie (24) et la deuxième entrée (26).

9. Vanne de distribution selon l'une quelconque des revendications précédentes, **caractérisée en ce qu'**elle est formée à partir de tôles pliées et assemblées, ou par un moulage de matière plastique.

10. Installation de ventilation prévue pour un bâtiment équipé d'un système de récupération d'énergie solaire, **caractérisée en ce qu'**elle comporte une vanne de distribution d'air (10) selon l'une quelconque des revendications précédentes.

## Patentansprüche

1. Luftverteilungsventil, das für einen erwärmten Luftstrom vorgesehen ist, der aus einer Luftschicht (6) kommt, die hinter einer belüfteten Fassade (2) eines Gebäudes angeordnet ist, wobei dieses Verteilungsventil (10) einen ersten Lufteintritt (20) beinhaltet, der vorgesehen ist, um die Luft der Luftschicht (6) zu empfangen, einen ersten Luftaustritt (22), der vorgesehen ist, um die Luft zu einem Verteilungsnetz in dem Gebäude (12) zu leiten, einen zweiten Luftaustritt (24), der vorgesehen ist, um die Luft nach außen zu leiten, und eine mobile Klappe (34), die den Luftstrom zu dem einen oder dem anderen der Austritte (22, 24) verteilt, **dadurch gekennzeichnet, dass** es einen zweiten Lufteintritt (26) beinhaltet, der vorgesehen ist, um die Außenluft zu entnehmen, und sie zu dem ersten Austritt (22) zu leiten.

2. Verteilungsventil nach Anspruch 1, **dadurch gekennzeichnet, dass** die mobile Klappe (34) an einem Drehpunkt (36) befestigt ist.

3. Verteilungsventil nach Anspruch 2, **dadurch gekennzeichnet, dass** der Drehpunkt (36) der mobilen Klappe (34) horizontal in einem zentralen Teil dieser Klappe angeordnet ist.

4. Verteilungsventil nach einem der vorstehenden Ansprüche, **dadurch gekennzeichnet, dass** die mobile Klappe (34) eine erste Endposition beinhaltet, die den ersten Eintritt (20) mit dem ersten Austritt (22) verbindet, und den zweiten Austritt (24), sowie den zweiten Eintritt (26) schließt.

5. Verteilungsventil nach einem der vorstehenden Ansprüche, **dadurch gekennzeichnet, dass** die mobile Klappe (34) eine zweite Endposition beinhaltet, die den ersten Eintritt (20) mit dem zweiten Austritt (24) verbindet, und in unabhängiger Weise den zweiten Eintritt (26) mit dem ersten Austritt (22) verbindet.

6. Verteilungsventil nach einem der vorstehenden Ansprüche, **dadurch gekennzeichnet, dass** der erste Eintritt (20) und der erste Austritt (24) die gesamte Breite dieses Ventils (10) einnehmen.

7. Verteilungsventil nach Anspruch 6, **dadurch gekennzeichnet, dass** über die Breite dieses Ventils (10) der zweite Eintritt (26) einen zentralen Teil einer Oberfläche einnimmt, die vorgesehen ist, um an die Fassade des Gebäudes zu kommen, wobei der zweite Austritt (24) die seitlichen Teile jeder Seite dieses zweiten Eintritts (26) einnimmt.

8. Verteilungsventil nach einem der vorstehenden Ansprüche, **dadurch gekennzeichnet, dass** es ein einziges Gitter (28) beinhaltet, das vorgesehen ist, um an die Fassade des Gebäudes zu kommen, den zweiten Austritt (24) und den zweiten Eintritt (26) abdeckend.

9. Verteilungsventil nach einem der vorstehenden Ansprüche, **dadurch gekennzeichnet, dass** es aus gefalzten und zusammengesetzten Blechen, oder durch eine Abformung von Kunststoffmaterial gebildet wird.

10. Belüftungsinstallation, die für ein Gebäude vorgesehen ist, das mit einem Solarenergie-Rückgewinnungssystem ausgerüstet ist, **dadurch gekennzeichnet, dass** sie ein Luftverteilungsventil (10) nach einem der vorstehenden Ansprüche beinhaltet.

## Claims

1. An air distribution valve provided for a heated airflow coming from an air layer (6) disposed behind a ventilated facade (2) of a building, this distribution valve (10) including a first air inlet (20) intended to receive the air of the air layer (6), a first air outlet (22) intended to direct the air towards a distribution network in the building (12), a second air outlet (24) intended to direct the air to the outside, and a movable flap (34) distributing the airflow towards either one of the outlets (22, 24), **characterized in that** it includes a second air inlet (26) intended to collect the external air and direct it towards the first outlet (22).

2. The distribution valve according to claim 1, **characterized in that** the movable flap (34) is fastened on a pivot (36).

3. The distribution valve according to claim 2, **characterized in that** the pivot (36) of the movable flap (34) is disposed horizontally in a central portion of this flap.

4. The distribution valve according to any one of the preceding claims, **characterized in that** the movable flap (34) includes a first end position connecting the first inlet (20) with the first outlet (22), and closing the second outlet (24) as well as the second inlet (26).

5. The distribution valve according to any one of the preceding claims, **characterized in that** the movable flap (34) includes a second end position connecting the first inlet (20) with the second outlet (24), and independently connecting the second inlet (26) with the first outlet (22).

6. The distribution valve according to any one of the preceding claims, **characterized in that** the first inlet (20) and the first outlet (24) occupy the entire width of this valve (10).

7. The distribution valve according to claim 6, **characterized in that** along the width of this valve (10), the second inlet (26) occupies a central portion of a surface intended to be set on the façade of the building, the second outlet (24) occupying the lateral portions of each side of this second inlet (26).

8. The distribution valve according to any one of the preceding claims, **characterized in that** it includes a unique grid (28) intended to be set on the façade of the building, covering the second outlet (24) and the second inlet (26).

9. The distribution valve according to any one of the preceding claims, **characterized in that** it is formed from folded and assembled sheet metals, or by molding of a plastic material.

10. A ventilation installation provided for a building equipped with a solar energy recovery system, **characterized in that** it includes an air distribution valve (10) according to any one of the preceding claims.
